# NEUE EUROPÄISCHE PATENTSCHRIFT

(11) **EP 1 444 965 B2**
(45) Veröffentlichungstag und Bekanntmachung des Hinweises auf die Entscheidung über den Einspruch: **20.07.2022**
(45) Hinweis auf die Patenterteilung: 11.05.2011
(21) Anmeldenummer: 04000286.7
(22) Anmeldetag: 09.01.2004
(51) Int. Cl.: A61C 13/00

(54) **Vorrichtung und Verfahren zur Herstellung von Zahnersatz**
Device and method for manufacturing dental prostheses
Dispositif et procédé de fabrication de prothèses dentaires

(30) Priorität: 05.02.2003 DE 10304757
(43) Veröffentlichungstag der Anmeldung: 11.08.2004
(73) Patentinhaber: Kulzer GmbH, 63450 Hanau (DE)
(72) Erfinder: Gärtner, Christian, 17389 Greifswald (DE); Kordass, Bernd, Prof. Dr. med., 17498 Neuenkirchen (DE)
(74) Vertreter: Schultheiss & Sterzel Patentanwälte PartG mbB

(56) Entgegenhaltungen:
- DE-A- 4 025 728
- DE-A1- 2 257 941
- DE-A1- 19 532 171
- DE-A1- 19 828 003
- DE-C1- 19 829 278
- JP-A- H09 238 959
- US-A- 4 575 805
- US-A- 5 527 182
- Lehrbuch Zahnärztliche Prothetik KH Körber, 3. Auflage 1985

## Beschreibung

Die Erfindung betrifft ein Verfahren zur Herstellung von Zahnersatz.

Es sind eine Reihe von Verfahren bekannt, welche die computergestützte Herstellung von Zahnersatz betreffen, beispielsweise das Fräsen von Keramikrohlingen nach 3D-Datensätzen (EP 904 743, DE 198 38 238 A1, DE 101 07 451 A1, CEREC^{®}-System von Sirona, PROCE-RA^{®}-System von Degussa, LAVA^{®}-System von 3M-Espe) oder der Einsatz von Rapid Prototyping Verfahren (DE 101 11 704 A1, DE 101 14 290 A1).

Ferner ist es bekannt, die Artikulatorfunktion statt mechanisch ganz oder teilweise auf dem Rechner durchzuführen ("Verbatim" Frühjahr 2000, US 6,152,731, US 6,322,359).

In der gattungsbildenden DE 198 28 003 A1 wird ein Verfahren und eine Vorrichtung zur Herstellung von medizinischen Teilen, insbesondere von Zahnersatz, beschrieben. Die Vorrichtung weist eine Sensorvorrichtung zur Erfassung der Dimensionen eines herzustellenden medizinischen Teils, eine Datenverarbeitungsvorrichtung zur Auswertung der erfassten Daten und eine Herstellungsvorrichtung zur Herstellung des medizinischen Teils aus den ausgewerteten Daten auf.

Ein weiteres Verfahren zur Herstellung von Zahnprothesen ist aus der DE 195 32 171 A1 bekannt, bei dem Daten eines Unter- und eines Oberkiefermodells aufbereitet werden und die Stellung der Zähne in der Zahnprothese in einem Softwaremodul ermittelt wird. Mittels einer Bearbeitungs- und/oder Montagevorrichtung werden das Unter- und/oder Oberkiefermodell und die Zähne positioniert und miteinander verbunden.

Aus der DE 40 25 728 A1 ist ein Verfahren zur Herstellung einer Zahnprothese mittels einer mit einer Dateneingabeeinheit versehenen Fräseinrichtung bekannt. Nach diesem Verfahren erfolgt die Eingabe der Daten eines Konstruktionsplanes in die Dateneingabeeinheit der Fräsmaschine, wonach Registratbasen aus Kunststoffblöcken gefräst und die Zähne in die jeweilige Basis eingesetzt werden.

Es stellt sich die Aufgabe, ein Verfahren zur Herstellung von Zahnprothesen zu entwickeln, bei dem möglichst die gesamte Planung und Durchführung rechnergesteuert oder rechnerunterstützt ablaufen.

Im Vorliegenden wird ein Herstellungsverfahren für Zahnprothesen beschrieben, bei dem auch die Aufstellung der Zähne virtuell am Rechner durchgeführt wird. Dabei werden die Datensätze konfektionierter Zähne in ein virtuelles Modell der Mundsituation eingepasst. Aus den danach vorliegenden Daten kann die Prothesenbasis direkt mittels CAM-Methoden hergestellt werden; oder es erfolgt das Einsetzen der konfektionierten Zähne in das physische Modell.

Die Erfindung betrifft ein Verfahren zur Herstellung von Zahnersatz gemäß Anspruch 1.

Das Verfahren läuft beispielsweise wie folgt ab: Zunächst werden nach mittlerweile gängigen Verfahren die 3-dimensionalen anatomischen Verhältnisse der Mundhöhle in einen Datensatz aufgenommen. Die Daten können entweder direkt vom Patienten aufgenommen werden, etwa mit einer 3D-Kamera, einer Mikrolaser-optischen Vorrichtung, einer Computertomagraphie-Vorrichtung oder einer Ultraschalleinrichtung, oder man scannt das konventionell abgenommene Gipsmodell ein. Die Daten von gegebenenfalls vorhandenen Bissschablonen und Bisswällen sind ebenfalls aufnehmbar. Es empfiehlt sich darüber hinaus, die Kieferdaten, die normalerweise am Patienten zur Einstellung des Artikulators genommen werden, in das System aufzunehmen. So entsteht ein Datensatz D0.

Anschließend werden die Daten in der Weise aufbereitet, dass die für eine virtuelle Zahnaufstellung relevanten geometrischen Verhältnisse als 3D-Modell im Rechner vorliegen. Dies wird im folgenden als Datensatz D1 bezeichnet.

An dieser Stelle des Verfahrens müssen die später einzusetzenden Prothesenzähne vom Anwender ausgewählt werden. Dies geschieht aus einem Datensatz D3, der vorher eingescannte, künstliche vorkonfektionierte Prothesenzähne verschiedener Größe und Gestalt umfasst. In der Regel wählt man die gewünschte Zahnform (etwa dreieckig oder quadratisch). Die geometrischen Daten der Mundsituation ermöglichen es, dass die passende Größe der Zähne vom System ermittelt wird. Die vorkonfektionierten Prothesenzähne haben bereits Oberflächen, die eine optimale Okklusion ermöglichen. Man erhält dann einen Vorschlag des Systems, bei dem die Gestalt und Größe sowie die jeweiligen Abstände zwischen den Zähnen - oder auch eine geringfügig versetzte Anordnung - eine optimale Okklusion bei einer Bissbewegung ergeben (Datensatz D2). Die ästhetische Kontrolle ist unmittelbar am Bildschirm möglich. Es besteht weiter die Möglichkeit, eine Frontalansicht zu generieren und diese in die digitale Photographie des Gesichts des Patienten einzumontieren.

An dieser Stelle ergeben sich für den Anwender Möglichkeiten, abweichend vom optimierten Modell ein natürliches Aussehen durch manuelle Versetzung einzelner Zähne zu erzeugen und das Ergebnis direkt am Bildschirm zu betrachten. Beispielsweise kann durch ein Drag-and-Drop-Verfahren die Position eines einzelnen Zahns in beliebiger Raumrichtung verschoben werden. Das System korrigiert die benachbarten und gegenüberliegenden Zähne sofort derart, dass wieder ein optimaler Biss erzeugt wird und es entsteht ein Datensatz D2A. Man kann auch die Okklusionsdaten der gesamten, einander gegenüberliegenden Zähne so aufbereiten, dass graphische oder Zahlendaten vorliegen, welche die veränderte Situation dahingehend bewerten, ob sie besser oder schlechter als die vorherige Situation ist. Selbstverständlich kann der vorherige Zustand (D2) bei Nichtgefallen oder bei schlechten Werten wiederhergestellt werden und dann eine weitere Zahnstellung ausprobiert werden - solange, bis sowohl der ästhetische Eindruck als auch die Okklusionsdaten zufriedenstellend sind.

Die Ausführung der Erfindung bestehen somit darin, dass nach Schritt f
g Kieferbewegungen im/am Rechner simuliert werden, nach Schritt g
h eine Kontrolle der Funktion, Okklusion im/am Rechner durchgeführt wird, und dass nach Schritt h
i die Zahnaufstellung manuell korrigiert wird und eine Neuberechnung zur Anpassung an ermittelte Bissdaten und optimaler Okklusion erfolgt (Datensatz D2A).
Es ist in jeder Stufe des Verfahrens möglich, die Kieferbewegungen am Rechner nach Art des bekannten virtuellen Artikulators nachzuvollziehen.

Nach Abschluss der Arbeit am virtuellen Modell kann direkt die Übertragung auf die Prothese erfolgen, d.h., nach den Daten der virtuellen Zahnaufstellung wird eine Prothesenbasis mit Positionierhilfen für die Zähne hergestellt, in die dann lediglich die betreffenden ausgewählten vorkonfektionierten Zähne eingesetzt zu werden brauchen.

Die Prothesenbasis kann direkt erzeugt werden, oder man kann eine Gußform für sie herstellen. Als Verfahren bieten sich etwa Fräsen oder Rapid-Prototyping an.

Um die genau Passung der Kunstzähne in die Prothesenbasis zu gewährleisten, können beispielsweise folgende Methoden angewandt werden, die anhand der Figuren erläutert werden:

### Zeichnungen:

Fig. 1 A)
   zeigt links den angestrebten Zustand, der nach der virtuellen Zahnaufstellung festliegt und rechts die Verwirklichung nach dem im folgenden beschriebenen Legostein Prinzip 1.
Fig. 1 B)
   zeigt wiederum links den angestrebten Zustand, der nach der virtuellen Zahnaufstellung festliegt, und rechts die Verwirklichung nach dem im folgenden beschriebenen Attachment-Prinzip 2.

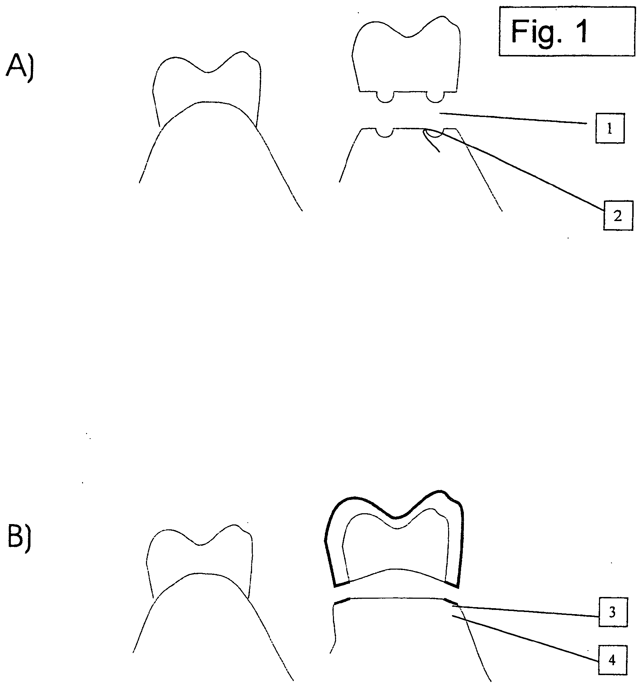

### 1. Legostein-Prinzip (Fig. 1, A):

Man kann an den Stellen der Prothesenbasis, wo die künstlichen Zähne aufzustellen sind, spezielle Strukturen vorsehen. Diese Strukturen müssen
a) eine definierte räumliche Orientierung in sechs Freiheitsgraden besitzen,
b) geometrische Merkmale aufweisen, die eine Formkongruenz zu der jeweiligen Basis des zugehörigen künstlichen Zahns gewährleisten,
c) derart ausgebildet sein, dass der Zahn einpolymerisiert, eingeklebt oder in sonstiger Weise dauerhaft befestigt werden kann.

Beispielsweise ist die Ausarbeitung eines Plateaus an der Prothesenbasis möglich, welches drei halbkugelförmige im Dreieck angeordnete Erhebungen 1 aufweist, die sich eindeutig in dazu kongruente Vertiefungen 2 der Zahnbasis positionieren lassen. Dabei sind durch die räumliche Ausrichtung der Lage des Plateaus bereits fünf Freiheitsgrade festgelegt. Die Erhebungen dienen der Definition des sechsten Freiheitsgrads (Rotation um die Hochachse des Zahns). Die Erhebungen können auch so ausgestaltet sein, dass ein Einschnappen der Zähne ermöglicht wird, beispielsweise durch eine druckknopfartige Form.

### 2. Attachment Prinzip (Fig. 1, B)

Um eine Modifikation der Basis der künstlichen Zähne zu vermeiden, kann man eine ringähnliche Form 3 (in der Figur schwarz gefüllt im Querschnitt zu sehen) herstellen, die exakt und definiert der Geometrie des jeweiligen künstlichen Zahns angepasst ist. In dieses Attachment kann der künstliche Zahn hineingesteckt werden, so dass die räumliche Orientierung des Zahns bezogen auf das Attachment stets konstant definiert ist. Bei der Herstellung der Prothesenbasis werden entsprechende formkongruente Vertiefungen 4 an der jeweiligen Zahnposition ausgearbeitet oder freigelassen, die eine wiederum exakte und definierte Positionierung des Attachments in allen sechs Freiheitsgraden gewährleisten. Somit kann das Attachment definiert positioniert werden und der entsprechende künstliche Zahn (einschließlich der bekannten räumlichen Orientierung bezüglich des Attachments) fixiert werden. Nach der Fixierung des künstlichen Zahns kann das Attachment verworfen werden.

Das Patent offenbart auch eine Vorrichtung zur Durchführung des Verfahrens zur Herstellung von Zahnersatz, im wesentlichen bestehend aus
a Einscann- oder Aufnahmeapparat zur Aufnahme eines digitalen 3D-Datensatzes D0 der Mundsituation am Patienten oder am (Gips)Modell,
b Verarbeitungseinrichtung zur Erzeugung der Daten eines virtuellen Modells der Mundsituation (Datensatz D1),
c 3D-Datensatz vorkonfektionierter Prothesenzähne D3,
d Verarbeitungsmodul zur Einpassung der Zahndaten D3 in die Mundsituationsdaten D1 unter Erzeugung eines virtuellen Modells mit integrierten Prothesenzähnen (Datensatz D2),
e Simulationsmodul für die Kieferbewegungen (virtueller Artikulator), bei dem veränderte Zahnpositionen am virtuellen Modell D2 getestet und optimiert werden,
f Vorrichtung zur Herstellung einer Prothesenbasis aus den Datensätzen D2.

Die einzelnen Bestandteile der Vorrichtung werden im folgenden erläutert:
a Bei dem Einscann- oder Aufnahmeapparat handelt es sich beispielsweise um eine 3D-Kamera, einer Mikrolaser-optische Vorrichtung, eine Computertomagraphie-Vorrichtung oder einer Ultraschalleinrichtung.
b Verarbeitungseinrichtung zur Erzeugung der Daten eines virtuellen Modells der Mundsituation (Datensatz D1). Dies ist in der Regel ein Computer, etwa ein Personal Computer in Verbindung mit einem entsprechenden Programm (Software).
c Bei dem 3D-Datensatz vorkonfektionierter Prothesenzähne D3 handelt es sich um Daten, die aus dem Einscannen von Prothesenzähnen stammen.
d Das Verarbeitungsmodul ist in der Regel ein zu diesem Zweck erstelltes Computerprogramm.
e Der virtuelle Artikulator ist z.B. das in "Verbatim" Frühjahr 2000 beschriebene System.
f Vorrichtungen zur Herstellung einer Positionierschablone oder einer Prothesenbasis sind bekannt, beispielsweise Rapid Prototyping Geräte.

## Patentansprüche

1. Verfahren zur Herstellung von Zahnersatz, mit den Schritten
a Aufnahme und Digitalisierung der 3-dimensionalen, anatomischen Verhältnisse in der Mundhöhle;
b gegebenenfalls Aufnahme und Digitalisierung der 3-dimensionalen Daten von Bissschablonen incl. Bisswällen;
c gegebenenfalls Aufnahme der Kieferdaten, die normalerweise am Patienten zur Einstellung des Artikulators genommen werden;
d Verarbeitung des Datensatzes D0 aus a und ggf. b und/oder c in der Weise, dass die relevanten anatomischen Strukturen für eine virtuelle Zahnaufstellung festliegen und ein virtuelles Modell als Datensatz D1 erhalten wird;
e Auswahl der 3-D Datensätze konfektionierter, vorher eingescannter Zähne aus einem Datensatz D3;
f virtuelle Aufstellung der Zähne in das virtuelle Modell, Datensatz D2,
g nach Schritt f Kieferbewegungen im/am Rechner simuliert werden,
h nach Schritt g eine Kontrolle der Funktion, Okklusion im/am Rechner durchgeführt wird,
i nach Schritt h die Zahnaufstellung manuell korrigiert wird und eine Neuberechnung zur Anpassung an ermittelte Bissdaten und optimaler Okklusion erfolgt (D2A),
j direkte Herstellung der Prothesenbasis - nach den Daten der virtuellen Zahnaufstellung - mit Positionierhilfen für die endgültige korrekte Positionierung und Fixierung der konfektionierten Zähne, und das Einsetzen der vorkonfektionierten Zähne in die Prothesenbasis.

2. Verfahren nach Anspruch 1, **dadurch gekennzeichnet, dass**
Schritt a durch direkte Aufnahme der Mundsituation mit einer 3D Kamera erfolgt.

3. Verfahren nach Anspruch 1, **dadurch gekennzeichnet, dass**
Schritt a durch Einscannen des Gipsmodells erfolgt.

## Claims

1. Method for the production of dental prosthesis, with the steps:
a recording and digitizing the 3-dimensional, an-atomical relationships in the oral cavity;
b if applicable recording and digitizing the 3-dimensional data of bite moulds incl. bite blocks;
c if applicable recording the jaw data which are normally taken on the patient for adjusting the articulator;
d processing the data set D0 from a and if applicable b and/or c such that the relevant anatomical structures are secure for a virtual tooth placement and a virtual model is obtained as data set D1;
e selection of the 3-D data sets of fabricated, previously scanned-in teeth from a data set D3;
f virtual placement of the teeth into the virtual model, data set D2;
g after step f mandibular movements are simulated in/on the computer,
h after step g an inspection of the function, occlusion is carried out in/on the computer,
i after step h the tooth placement is corrected manually and a new calculation takes place for adaptation to determined bite data and optimal occlusion (D2A),
j direct manufacture of the prosthesis base - according to the data of the virtual tooth placement - with positioning aids for the final correct positioning and fixing of the fabricated teeth, and by the insertion of the prefabricated teeth into the prosthesis base.

2. Method according to Claim 1, **characterized in that**
step a takes place by direct recording of the oral situation with a 3D camera.

3. Method according to Claim 1, **characterized in that**
step a takes place by scanning in the plaster model.

## Revendications

1. Procédé de fabrication d'une prothèse dentaire comprenant les étapes de
a pri, se de vue et numérisation des rapports anatomiques tridimensionnels de la cavité buccale ;
b le cas échéant, prise de vue et numérisation des données tridimensionnelles des plaquesbases y compris des bourrelets d'occlusion ;
c le cas échéant, prise de vue des données de la mâchoire, qui sont prises normalement sur le patient pour régler l'articulateur ;
d traitement du jeu de données D0 à partir de a et le cas échéant de b et/ou c de manière à ce que les structures anatomiques pertinentes soient définies pour un placement virtuel des dents et qu'un modèle soit obtenu comme jeu de données D1;
e sélection des jeux de données tridimensionnels de dents fabriquées et préalablement scannées à partir d'un jeu de données D3 ;
f placement virtuel des dents dans la modèle virtuel, jeu de données D2,
g après l'étape f les mouvements de la mâchoire sont simulés dans/sur l'ordinateur,
h après l'étape g un contrôle du fonctionnement, de l'occlusion est effectué dans/sur l'ordinateur,
i après l'étape g le placement des dents est corrigé manuellement et un nouveau calcul est effectué pour l'adapter à des données d'occlusion calculées et pour une occlusion optimale (D2A)
j une fabrication directe de la base de prothèse, d'après les données du placement virtuel des dents, avec des aides au positionnement pour le positionnement correct final et la fixation des dents fabriquées, et par la mise en place des dents préfabriquées dans la base de prothèse.

2. Procédé selon la revendication 1, **caractérisé en ce que** l'étape a s'effectue par une prise de vue directe de la situation buccale avec une caméra 3D.

3. Procédé selon la revendication 1, **caractérisé en ce que** l'étape a s'effectue par un scannage du modèle en plâtre.
